# EUROPEAN PATENT APPLICATION

(11) **EP 1 548 488 A1**
(43) Date of publication of application: **29.06.2005**
(21) Application number: 03766638.5
(22) Date of filing: 25.07.2003
(51) Int. Cl.: G02C 5/22

(54) **TEMPLE CONNECTION STRUCTURE OF SPECTACLES FRAME**

(30) Priority: 02.08.2002 JP 2002226425
(71) Applicant: Aesis Ltd., Osaka-shi, Osaka 544-0011 (JP); Oura, Issei, Osaka-shi, Osaka 546-0033 (JP)
(72) Inventor: OURA, Issei, Osaka-shi, Osaka 546-0033 (JP); TAMURA, Shinzo, Osaka-shi, Osaka 544-0011 (JP)
(74) Representative: Grünecker, Kinkeldey, Stockmair & Schwanhäusser Anwaltssozietät
(86) International application number: PCT/JP2003/009496
(87) International publication number: WO 2004/013679

(57) **Abstract**

In the temple connection structure of an eyeglass frame according to the present invention, clamp portions for spherical shafts are provided on both sides of the front frame. The ends of the temples are rotataby connected to central shafts of the spherical shafts through joint members. The clamp portions hold and fix the spherical shafts so as to be finely adjustable in any desired direction. Thus, the opening of the temples, orientation of the temples in the vertical direction, and twisting of the temples can be optimally adjustable according to the shapes and sizes of the face, nose and ears of the user.

## Description

### Technical Field

This invention relates to a temple connection structure for connecting temples to both ends of a front portion of an eyeglass frame so as to be foldable.

### Background Art

In ordinary eyeglass frames, except for rim-less frames, two rims surrounding the lenses are coupled together by a coupling, temples are coupled through joint portions directly provided at both ends of the rims or to L-shaped couplings provided at both ends of the rims through joint portions, and nose pads are formed on the coupling or on the rims. In particular, in the latter temple connection structure, which uses joint portions, thin ⊐-shaped hinges are generally used.

Threaded shafts provided as rotation fulcrums on the ⊐-shaped hinges may loosen little by little as the temples are repeatedly folded and unfolded. In order to avoid this, as a hinge using no threaded shaft, in JP patent publication 8-68973 (patent document 1), a hinge is shown which includes a spherical body coupled to an end of a temple, and two linear bodies provided so as to surround the spherical body by 1/2 or over at upper and lower positions of the equator line of the spherical body to rotatably couple the temple to an L-shaped coupling.

As an example of a hinge using a similar spherical body, in JP utility model publication 3002342 (patent document 2), a hinge is shown in which a fixing member is provided at the end of a coupling and a bending member is provided between the end of a temple and the fixing member, the fixing member is formed by forming a spherical bearing surface on a recess having its one end open, the bending member having two members coupled with a threaded shaft so as to be bendable with a threaded shaft, one of them being fixed to the temple end, and a spherical shaft formed integrally on the other member being fitted on the spherical bearing surface, a plurality of small protruding pieces and recessed portions are provided on the outer surface of the spherical shaft and the bearing surface at equal intervals, respectively, so that their biting position is changeable.

Also, as an improved example of the above ⊐-shaped hinge, in JP utility model publication 62-35322 (patent publication 3), a spherical bearing member is provided at the coupling end, a slit is formed in the spherical member to receive a cam-shaped flange member, and the flange member is inserted into the slit to thread a threaded shaft formed vertically on the spherical member and the flange member flange to rotatably couple the temple. When the temples are folded inwardly while the eyeglasses are not in use, since the corner of the flange member is cut in a cam shape, it will not protrude outwardly of the spherical body to eliminate protrusions and angular portions as viewed from outside.

It is required that when worn, with the temples engaging the ears, the nose pads contact the nose such that the frame is stably supported even when the wearer's head moves. But the shape of the wearer's head, including the positions of the ears, is not necessarily symmetrical with respect to the vertical centerline of the head. Thus, if the right and left temples and the nose pads are provided completely parallel to each other, the front portion of the frame cannot be positioned horizontally and properly when worn.

In order to avoid such trouble, in the above conventional general eyeglass frames, the legs of the nose pads are bent so that the pads abut the nose when worn. The L-shaped couplings also have to be adjusted by bending and/or twisting. Such adjustment is carried out with the couplings clamped by a tool. This work is extremely difficult and needs experience. The couplings can easily come off when bent or twisted. In a metallic eyeglass frame, the couplings are bent or twisted as mentioned above so that the end covers of the temples stably engage the wearer's ears when worn. In the case of resin eyeglass frames, which are typically used for sunglasses and polarized lens eyeglasses, since there are no L-shaped couplings, adjustment has to be made by bending or twisting the temples themselves.

In the connecting structure of patent document 1, which uses hinges, since no threaded shaft is used as the shaft joint, the temples do not loosen. Each temple is foldable by rotating the spherical body at the temple end relative to the linear bodies. The spherical bodies also allow the temples to be twisted relative to the couplings. Adjustment of the temples is thus easy. But this connecting structure actually needs a rim lock corresponding to the couplings and the linear bodies, so that it cannot be directly applied to a coupling-less eyeglass frame.

In the connecting structure using the hinges of patent document 2, each temple is foldable about the threaded shaft of the bending member. In this arrangement, the angle of each temple when worn is adjusted by changing the fitting state between the spherical shaft and the spherical bearing surface. But this connecting structure, too, is one formed at the end of the temple, so that it cannot be applied to a temple-less eyeglass frame. Also, because the fitting state of the small protruding pieces and the recessed portions of the spherical shaft and the spherical bearing surface is forcibly changed to a different state, if the bending member is destroyed or the degree of change is excessive, fine adjustment is difficult.

In the connecting structure using the hinge of patent document 3, the temple is foldable about the threaded shaft of the spherical bearing, so that the end of a bracket plate at the temple end will not protrude from the spherical bearing when folded. But since the spherical bearing is fixed to the coupling, the temple cannot be twisted in the axial direction, so that the twisting adjustment of the temple or the like is as difficult as the first-mentioned conventional example.

An object of this invention is to provide a temple connection structure of an eyeglass frame in which in view of the abovementioned various problems, fine adjustments of the opening angle of the temples, orientation of the temples in the vertical direction, and twisting angle of the temples are easy, and after fine adjustments, the ends of the temples can be rigidly held by and fixed to the front frame.

### Disclosure of the Invention

There is provided a temple connection structure for connecting a temple to a front portion of an eyeglass frame, the temple connection structure comprising a a clamp portion provided at one end of the front portion of the eyeglass frame, a spherical member received in the clamp portion, and a joint member provided at a front end of the temple and coupled to the spherical member so that the temple is foldable and unfoldable by pivoting about a central axis of the spherical member within a predetermined angle, the spherical shaft being turnable in any desired direction, whereby the orientation of the temple is finely adjustable, and being adapted to be clamped in position by the clamp portion with the orientation of the temple finely adjusted.

With such a connecting structure, the temples can be freely opened and closed about the central axis of the spherical shafts through the joint members, which are provided so as to be pivotable therearound, within a predetermined angle range. The clamp portions are provided so as to be finely adjustable in any desired direction relative to the spherical shafts. Thus, by loosening the clamp pressure of the clamp portions, the spherical shafts can be freely moved in any desired direction relative to the clamp portions.

At this time, for the spherical shafts, it is possible not only to set the opening angle of the temples to a suitable range, but to finely adjust the orientation of the temples in the vertical direction and the twisting of the temples using the spherical contact surfaces.

The clamp portions, which hold and fix the spherical shafts, are formed so as to protrude outwardly from the rims. These clamp portions, which are formed so as to extend from the rims, can be formed them into upper and lower clamp portions including the rim ends. Otherwise, they may be formed by dividing them into front and rear portions. In either case, the two members are clamped together by clamp means for clamping divided rim ends, such as a screw. This clamp force is transmitted to the clamp portions and converted to clamp pressure by the upper and lower or front and rear clamp portions to hold and fix the spherical shafts.

In finely adjusting the opening angle of the temples, orientation of the temples in the vertical direction and twisting of the temples, with the clamp force slightly loosened, fine adjustment is made in the optimum direction relative to the face, nose and ears of the person who uses the eyeglass frame by forcibly changing the set state of the spherical shafts relative to the clamp portions. In carrying out such fine adjustments, particularly for the vertical orientation and twisting of the temples, adjustment was made by forcibly applying force with a tool while clamping it with another tool. But such dangerous work is not necessary by the above fine adjustments.

Each spherical shaft may be formed by joining two semisphrical bodies together with the joint member sandwiched therebetween so that the joint member can rotate about the central axis of the spherical shaft. Otherwise, a slit may be provided in a completely spherical body so as to be rotatable about a central axis, and the joint member may be connected to the spherical member. In this case, in order to restrict the rotation angle of the temples, they are connected to the spherical shafts through angle restricting means.

In the above arrangement, the spherical shafts are mounted to the temple ends through the joint members. In a different arrangement, the joint members are omitted, clamp arms are formed at the temple ends, and the clamp arms are directly mounted to the spherical shafts, which are held by and fixed to the clamp portions.

In this arrangement, clamp portions for spherical shafts may be provided on both sides of the front portion of the eyeglass frame, the temple ends are rotatably coupled to the spherical shafts, which are fitted in the clamp portions, so that the temples can be opened and closed by rotating them by a predetermined angle, and the temple ends are rotatable about the shaft extending through the center of the spherical shafts.

In this case, too, at least opening and closing of the temples, and fine adjustment in the vertical direction of the temples are possible. In any of the above temple connection structures, fine adjustment in the vertical direction of the temples is possible, so that even though the shapes and sizes of the nose, eye sockets, and ears differ among different races, since the inclination angle of the front frame relative to the temples can be easily and finely adjustable, it is possible to provide an eyeglass frame which fits people of all over the world.

### Brief description of the drawings

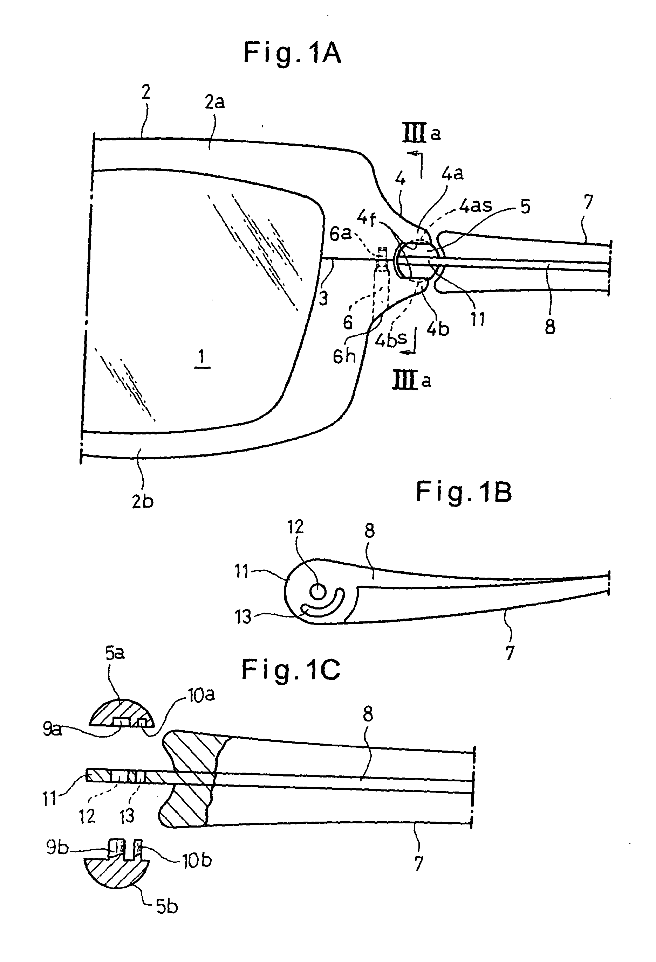

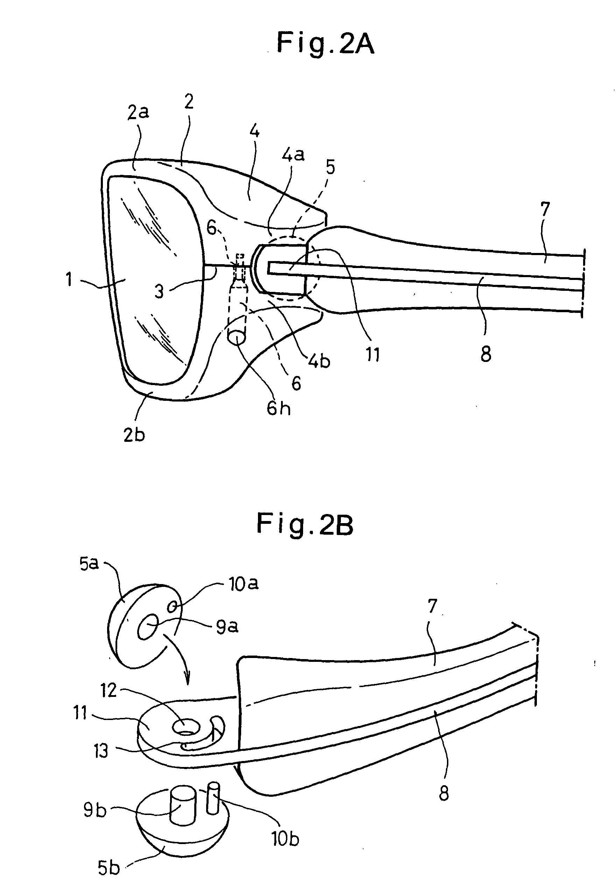

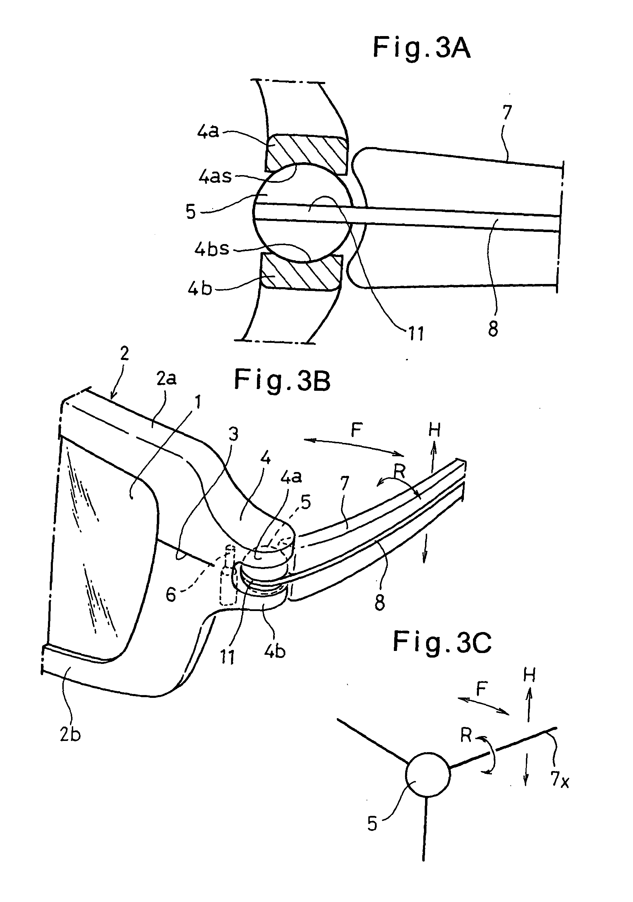

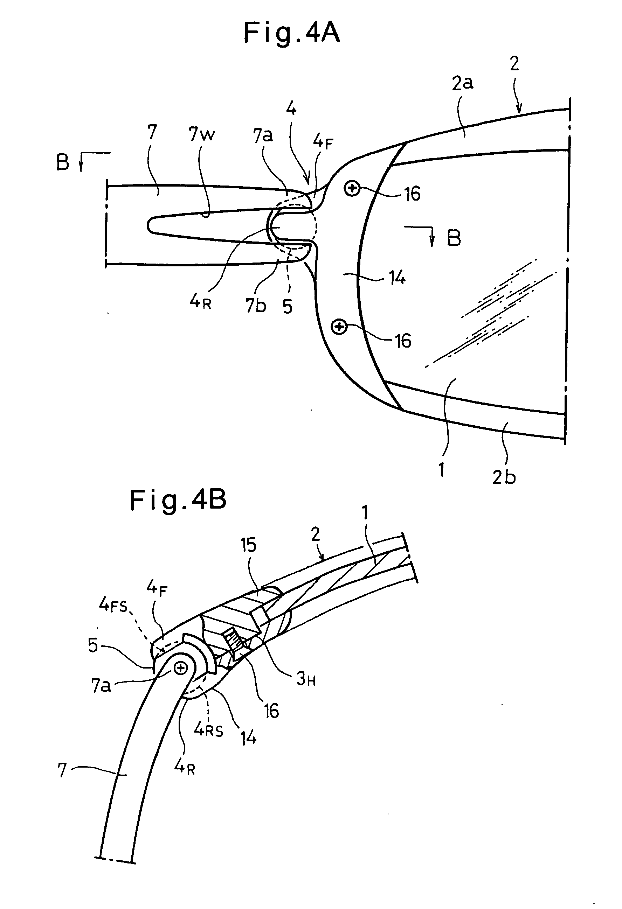

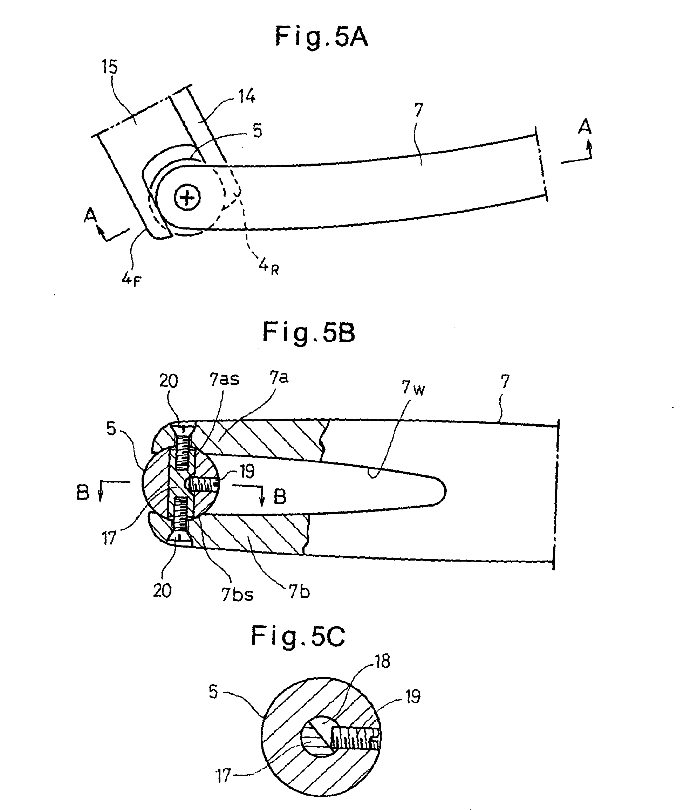

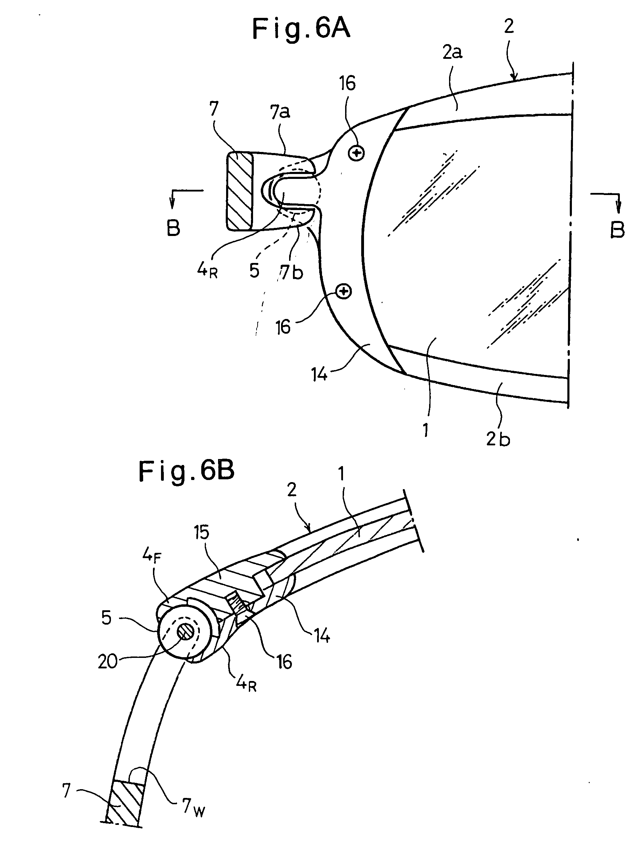

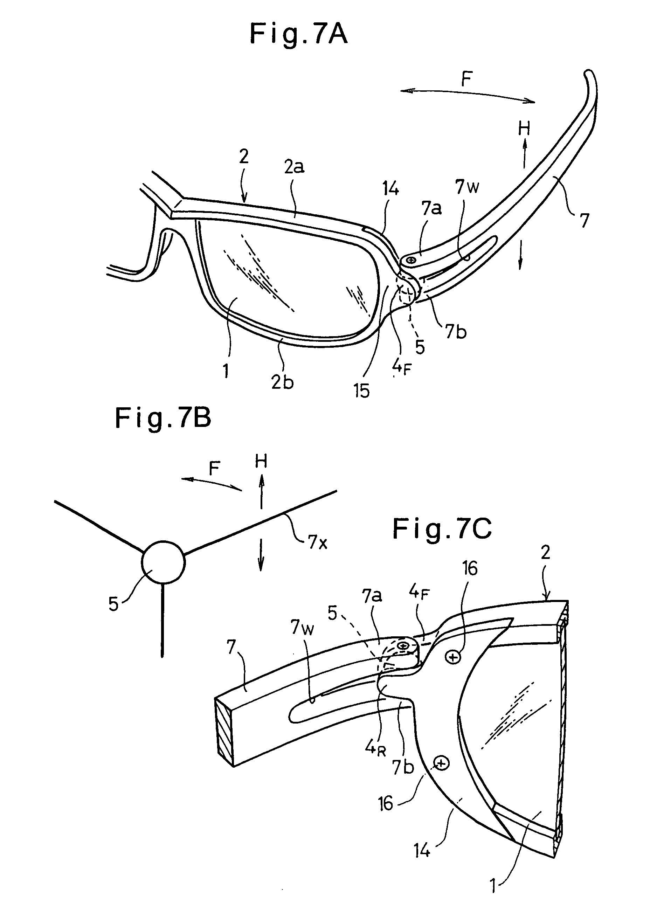

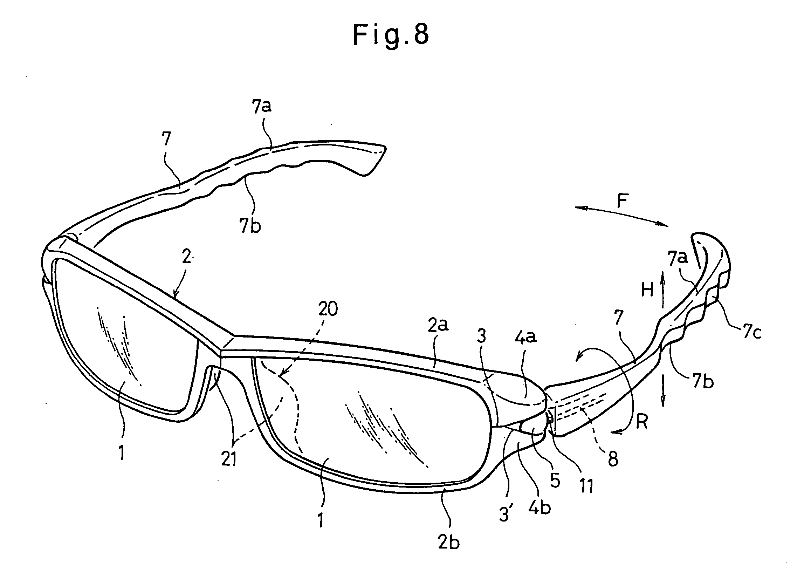

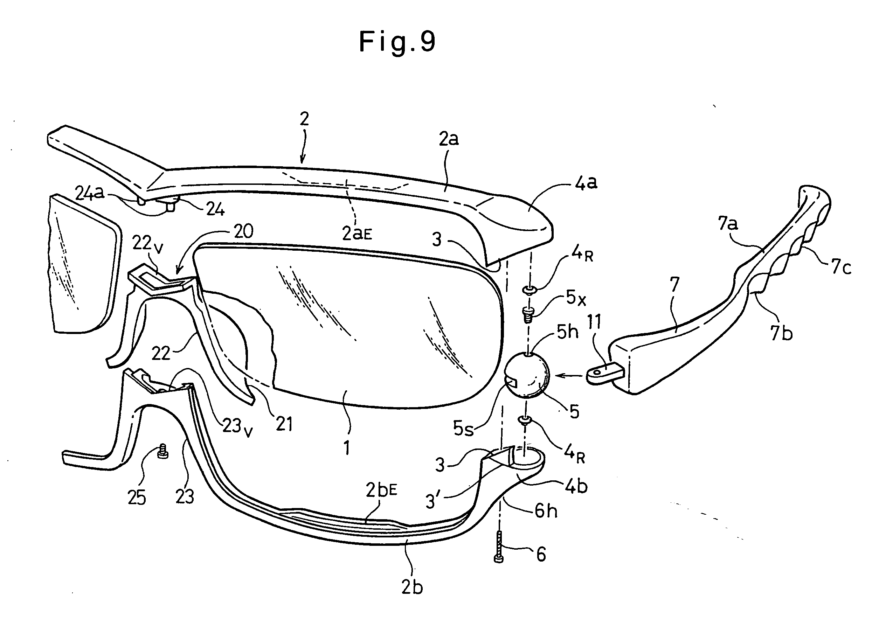

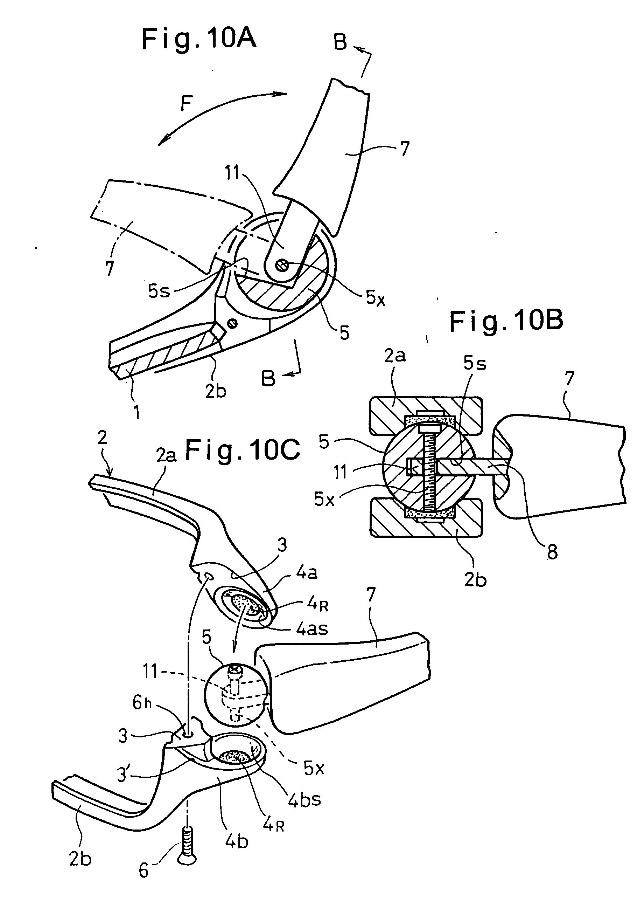

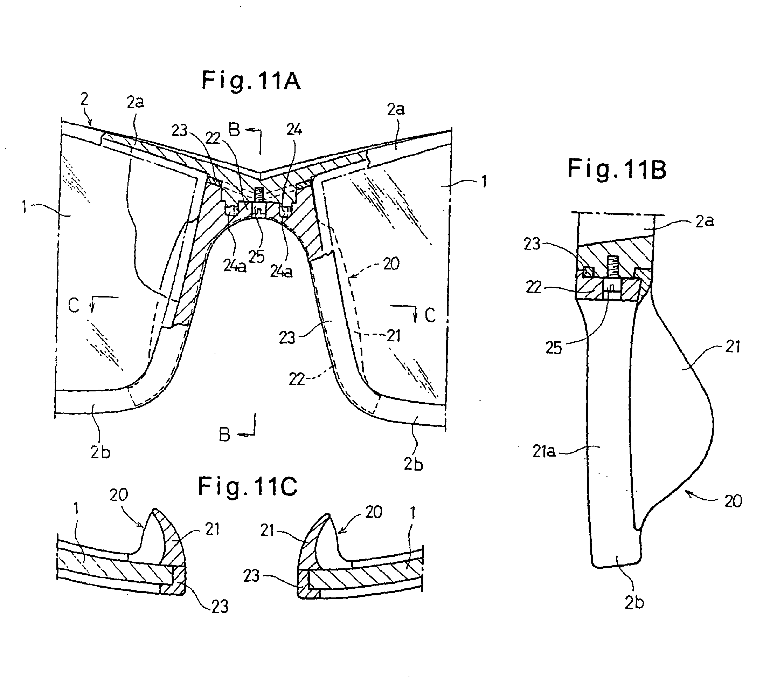

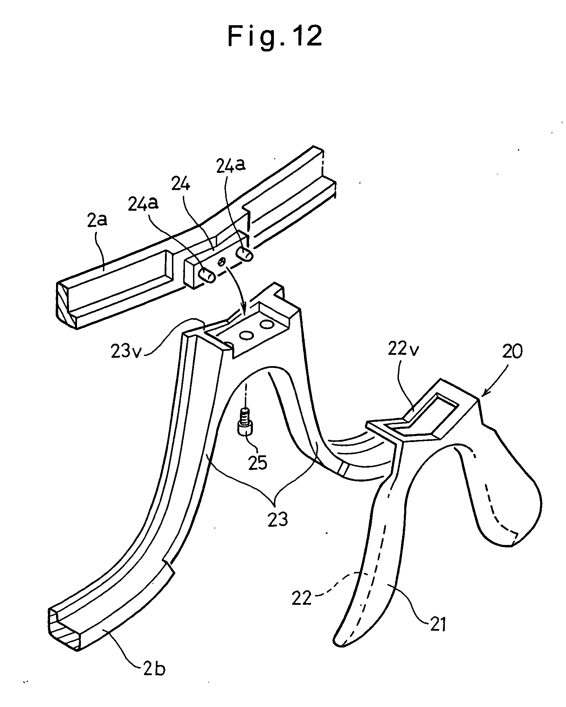

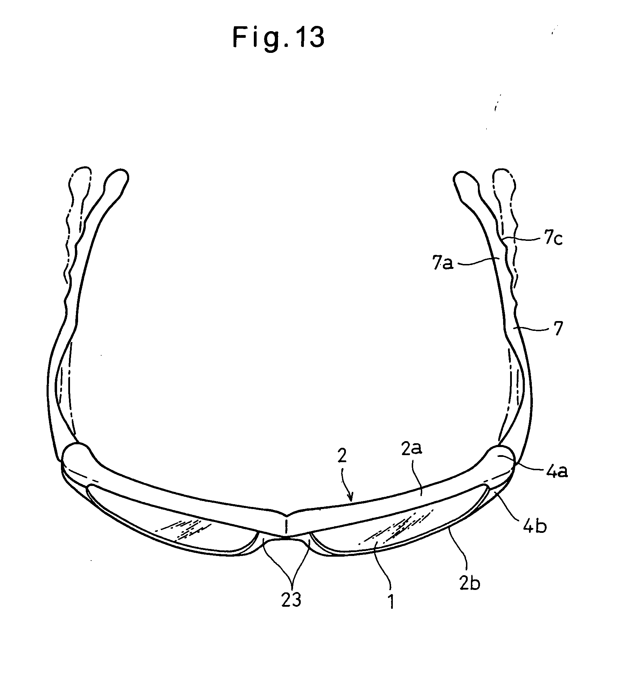

Fig. 1(a) is a partial rear view of an eyeglass frame including a temple connection structure of a first embodiment, Fig. 1(b) is a partial, plan view of a temple, Fig. 1(c) is an exploded side view, Fig. 2(a) is a partial side view of the eyeglass frame of Fig. 1(a), Fig. 2(b) is an exploded perspective view of a spherical shaft portion, Fig. 3(a) is a sectional view taken along line IIIa-IIIa of Fig. 1(a), Fig. 3(b) is a partial perspective view of the eyeglass frame of Fig. 1(a), Fig. 3(c) shows the relation between the spherical shaft and the imaginary central axis of the temple, Fig. 4(a) is a partial rear view of an eyeglass frame including a temple connection structure of a second embodiment, Fig. 4(b) is a sectional view taken along line B-B of Fig. 4(a), Fig. 5(a) is a partial plan view of a temple of the eyeglass frame of the second embodiment, Fig. 5(b) is a sectional view taken along line A-A of Fig. 5(a), Fig. 5(c) is a sectional view taken along line B-B of Fig. 5(b), Fig. 6(a) is a partial rear view, Fig. 6(b) is a sectional view taken along line B-B of Fig. 6(a), Fig. 7(a) is a partial perspective view of the eyeglass frame of the second embodiment, Fig. 7(b) is shows the relation between the spherical shaft and the central axis of the temple, Fig. 7(c) is a partial rear view of Fig. 7(a), Fig. 8 is a perspective view of an eyeglass frame including a temple connection structure of a third embodiment, Fig. 9 is a partial exploded perspective view of the eyeglass frame of the third embodiment, Fig. 10(a) is an enlarged cross-sectional view of the temple connection structure of the third embodiment, Fig. 10(b) is a sectional view taken along line B-B of Fig. 10(a), Fig. 10(c) is an exploded perspective view thereof, Fig. 11(a) is a partial enlarged longitudinal front view of the nose pad portion of Fig. 8, Fig. 11(b) is an enlarged sectional view taken along line B-B of Fig. 11(a), Fig. 11(c) is a sectional view taken along line C-C of Fig. 11(a), Fig. 12 is an exploded perspective view in which the nose pad portion is viewed from inside, and Fig. 13 is a one-dot chain lined plan view showing the use state.

### Best mode for embodying the invention

The embodiments of the invention are now described with reference to the drawings. Fig. 1(a) is a partial front view, (b) is a partial plan view of a temple including a spherical shaft, and (c) is an exploded side view of the spherical shaft and the temple end, showing a temple connection structure of an eyeglass frame of the first embodiment. The eyeglass frame shown is a resin frame for colored eyeglasses or polarized ones, and comprises rims 2 supporting lenses 1 and coupled together by a coupling member (not shown) to form a front portion of the frame, nose pads (not shown), and temples 7. The rims 2 surround the entire circumference of the lenses 1. The rims 2 comprise separately formed upper and lower members 2a and 2b that are brought into abutment with each other along a horizontal line 3 and coupled together by a threaded shaft.

Each rim 2 has an outwardly protruding clamp portion 4. The clamp portion 4 comprises upper and lower halves 4a and 4b, which are provided above and below the horizontal line 3, respectively. A U-shaped cutout having opposed surfaces 4f is defined between the upper and lower halves 4a and 4b of the clamp portion 4. A spherical member 5 has its top and bottom ends received in spherical recesses 4as and 4bs formed in the opposed surfaces 4f.

The threaded shaft 6 is inserted into a hole 6h formed in the upper and lower halves 4a and 4b of the clamp portion 4near their base portions until its external thread 6a, which is formed near its tip, engages an internal thread formed on the inner wall of hole 6h at its small-diameter portion which bridges the upper and lower halves 4a and 4b.

As shown in Figs. 1 and 2(b), the spherical member 5 comprises two semispherical bodies 5a and 5b which are coupled to a joint member 11 provided at the end of the temple 7 so as to sandwich the joint member 11. The joint member 11 is integrally provided at the end of a metallic core member 8 of the temple which is provided for reinforcement and decoration. Since the spherical member 5 can be turned in any direction, the temple can also be pivoted or turned about any axis of the spherical member 5. Details of its operation are described later.

A shaft 9b and a pin 10b protrude from one of the opposed surfaces of the two semispherical bodies 5a and 5b (from the surface of the body 5a in the example shown), and are received in a shaft hole 9a and a pin hole 10a formed in the other of the opposed surfaces of the semispherical bodies 5a and 5b. The joint member 11 is formed with a hole 12 through which the shaft 9b is passed, and a guide groove 13 through which the pin 10b is passed. The guide groove 13 serves to restrict the angle by which the temple 7 can pivot about the shaft 9b relative to the spherical member 5.

In Fig. 1(a), the temple 7 and the front portion of the frame are aligned. But actually, the temple 7 cannot be pivoted to the state of Fig. 1(a) because it is restricted by the guide groove 13. Fig. 1(a) is an imaginary view prepared in order to show how the temple is coupled to the front portion of the frame. Figs. 2 and 3, which are described later, show detailed connecting structure and the opening/closing angle.

The temple connection structure of an eyeglass frame of the first embodiment is assembled so as to connect the temple 7 to the outside of the rim 2 as shown in Fig. 2(a). With the shaft 9b of the lower semispherical body 5b passed through the shaft hole 12 of the joint member 11 and the pin 10b loosely fitted in the guide groove 13, the upper semispherical body 5a is pushed down until the shaft 9b and the pin 10b of the body 5b engage in the shaft hole 9a and the pin hole 10a of the body 5a. The thus assembled spherical member 5 is fitted in the space between the upper and lower halves 4a and 4b of the clamp portion 4.

Then, with the temples 7 positioned substantially parallel to each other, and each pin 10b abutting one end of the guide groove 13, the threaded shafts 7 are tightened to press the clamp halves 4a and 4b against the spherical members 5, thereby fixing the spherical members 5 so as not to turn in any direction relative to the rims 2. In this state, to put on the eyeglasses, the temples 7 are unfolded until they are substantially parallel to each other.

In this state, as shown in Fig. 3B, the temple 7 is pivotable about the spherical member 5 in the direction of the arrow F with the pin 10b guided in the guide groove 13, and stops when the temple 7 becomes parallel to the other temple, because the pin 10b abuts one end of the groove 13. The shaft 9b should be sufficiently long compared to the depth of the shaft hole 9a so that the joint member 11 will never be pressed hard by the semispherical bodies 5a and 5b when assembling the spherical member 5.

To adjust the position of the temple when it is fully opened, with the threaded shaft 6 slightly loosened, the spherical shaft 5 is turned by pushing the joint member 11 with fingers to pivot the temple in the direction of the arrow F in Fig. 3B. Simultaneously, the temple 7 is twisted, i.e. turned in the direction of the arrow R in Fig. 3(c) about the longitudinal central axis x of the temple, and/or pivoted in the direction of H in Fig. 3(c). With the temple position thus finely adjusted, the threaded shaft 6 is tightened.

Thus, according to the temple connection structure of this embodiment, the clamp portion 4 is formed so as to apply clamp pressure to the spherical shaft 5 from the upper and lower halves 4a and 4b of the clamp portion 4 by transmitting the clamp force for clamping the upper and lower halves 4a and 4b of the clamp portion 4 with the spherical member 5 selectively set in an arbitrary direction, the spherical shaft 5 is clamped and fixed by the clamp pressure. Thus, the spherical shaft 5 can be finely adjusted in an arbitrary direction.

Fig. 4(a) is a partial front view (view seen from inside) and Fig. 4(b) is a partial sectional plan view, of the temple connection structure of an eyeglass frame of the second embodiment. Unless specified otherwise, in the eyeglass frame of this embodiment, the object, intended use and material are the same as in the first embodiment. But while in the first embodiment, the end of the rim 2 and the clamp portion 4 were divided into the upper member 2a and the lower member 2b and the upper and lower halves 4a and 4b, respectively, along the line 3, in this embodiment, the rim 2 and the clamp portion 4 are not divided into upper and lower members. As described later, the rim 2 is formed integrally and the clamp portion 4 comprises front and rear members 4F and 4R arranged back and forth.

On the outside of a side end portion 15 of the rim 2, the front clamp member 4F protrudes. On the opposite side, opposing the side end portion 15, a fixed member 14 is provided. Outside the fixed member 14, the rear clamp member 4R protrudes. The fixed member 14 and the side end portion 15 extend vertically and are coupled together by screws 16.

A spherical member 5 is held and fixed between the front and rear clamp members 4F and 4R. Thus, by tightening the screws 16, the spherical member 5 is held in position between the clamp members 4F and 4R. As in the first and second embodiments, the front and rear clamp members 4F and 4R are provided with spherical bearing seats 4FS and 4RS on the surfaces for bearing the spherical member 5, and hold and fix the front and rear portions of the spherical member 5.

In this embodiment, as shown in Fig. 5, for the spherical member 5, a one-piece spherical body is used. To the spherical member 5, the front end of the temple 7 is coupled. At the end of the temple 7, an upper end portion 7a and a lower end portion 7b are formed at the tips of two fork-like arms by providing a branch space 7w. Between the upper and lower end portions 7a and 7b, the spherical shaft 5 is coupled. A shaft hole is formed in the spherical shaft 5 so as to extend vertically through its center. A shaft 17 is rotatably fitted in this shaft hole.

Into the shaft 17, threaded bolts 20 are threaded from the bottom end portions 7a and 7b to couple the upper and lower end portions 7a and 7b to the shaft 17. In the center of the shaft 17, a cutout 18 is formed. When a screw 19 is threaded into a threaded hole formed in the side of the spherical shaft 5, according to the protruding length of its inner end, the rotational angle of the shaft 17 is restricted so as to be within a predetermined range to form a rotational angle restricting means. In the upper and lower end portions 7a and 7b, too, spherical bearing seats 7as and 7bs are formed on surfaces for bearing the spherical shaft 5.

The temple connection structure of an eyeglass frame of this embodiment differs from the first embodiment in that the end of the temple 7 is directly connected to the end of the rim 2 through the spherical member 5. It also differs in that for the clamp portion 4, the fixed member 14 is fixed from inside toward outside of the eyeglasses relative to the side end portion 15 of the rim 2, and the spherical shaft 5 is held and fixed by the front and rear clamp portions 4F and 4R, which are provided at the respective protruding ends.

But it is similar to the first embodiment in that the spherical member 5 is held and fixed between the front and rear clamp members 4F and 4R by tightening the screws 16. Thus, it is the same in that with the holding and fixing state of the spherical shaft 5 selectively set in an arbitrary direction, it is possible to hold and fix the spherical shaft with the holding pressure and the spherical shaft 5 can be set in an arbitrary direction so as to be finely adjustable.

Also, it is the same in that in holding and fixing the spherical shaft 5 by setting in a predetermined direction, by slightly loosening the screw 16, the spherical shaft 5 can be held and fixed by setting the open angle of the temple 7 shown by the arrow F in Fig. 7 within a predetermined angle, and also finely adjusting in the vertical direction shown by the arrow H. But since the upper and lower end portions 7a and 7b of the temple 7 are connected in a direction perpendicular to the spherical shaft 5, which is held and fixed by the front and rear clamp portions 4F and 4R, the temple 7 cannot be twisted about its longitudinal axis.

Fig. 8 and the later figures show a perspective view of an eyeglass frame (including the lenses) to which the temple connection structure of the third embodiment is applied. The temple connection structure of this embodiment is a partially modified example of the first embodiment. Below, different points are mainly described, and members of the same structure and function are denoted by the same numerals and description is omitted. In this embodiment, the clamp portion is divided into upper and lower members 4a and 4b along an obliquely upwardly extending line 3. An inscribed line 3' is provided so as to slope downwardly toward the outside while symmetrical with the dividing line 3. The top end of the lower clamp member 4b near its portion where it bears the spherical member 5 is cut along the extended line of the inscribed line 3', and the spherical member 5 is fitted in the space formed there.

For the inscribed line 3', the surface of the lower clamp portion 4b is scraped only slightly so that when the eyeglass frame is seen from the front, the dividing line 3 and the inscribed line 3' appear to be V-shaped decoration lines, so that it presents an outer look which gives modern feelings. For the spherical member 5, an integral spherical body is used as shown in Figs. 9 and 10. A slit 5s is formed at an intermediate height position. A shaft 5x is inserted in a vertical shaft hole 5h extending the central position.

Before inserting the shaft 5x, a joint member 11 at the end of the temple 7 is inserted into the slit 5s. By passing the shaft 5x through a shaft hole formed in the joint member 11, the temple 7 is integrally coupled to the spherical shaft 5. As shown in Fig. 10, the slit 5s is provided so as to be slightly deeper than the thickness of the joint member 11 and so that the temple 7 is rotatable about the shaft 5x within a predetermined angular range shown by the arrow F in the figure. At both ends of the predetermined angular range, since the joint member 11 abuts the walls at both ends of the slit 5s and its rotation is stopped, the slit 5s also serves as an angle restricting means, too.

Further, as shown in Fig. 10(c), on the surfaces of the upper and lower clamp portions 4a and 4b for receiving the spherical shaft 5, spherical bearing seats 4as and 4bs in the shape of recessed spherical surfaces are formed in the same manner as in the first embodiment. In order to prevent fluctuations in the fixed state of the spherical shaft 5, rubber sheets 4R are received at their centers so as to frictionally engage the spherical shaft 5. On the surface of the spherical shaft 5, in order to similarly prevent fluctuations in the fixed state and to decoratively show the spherical shaft 5, silver slip stop film is thinly applied.

According to the temple connection structure of the third embodiment, which has the above structure, since it is structured such that the spherical shaft 5 is coupled to the joint member 11, which is provided at the end of the temple 7, and the spherical shaft 5 is held and fixed by the upper and lower clamp portions 4a and 4b, the basic structure is substantially the same as the first embodiment. Thus, for opening and closing of the temple 7 during normal use, and for the adjustment of the spherical shaft 5 at the time of fixing, the same functions as in the first embodiment are obtained. But since the slit 5s of the spherical shaft 5 is used as the angle restricting means, it is advantageous in that it is stronger than the first embodiment, and the temple connection structure is difficult to break. Also, since the V-cut decorative lines are provided at the boundary between the upper and lower clamp portions 4a and 4b, which hold the spherical shaft 5, the outer appearance gives a chic, modern impression.

In the eyeglass frame to which the temple connection structure of the third embodiment is applied, as shown in Fig. 8, new devices are added to a nose abutment 20 and end covers 7a at the tips of the temples 7. For the nose abutment 20, a nose abutment frame 22 having nose abutment frames 21 is fitted on a coupling frame 23 near the center of the right and left lower rims 2b, a presser member 24 provided near the coupling portion near the center of the upper rims 2a is fitted from above, a threaded bolt 25 is passed through the coupling frame 23 and the nose abutment frame 22, and the presser member 24 is tightened to make the portion near the central portion of the eyeglass frame as an integral structure.

The nose abutment frame 22 is integrally formed with the nose abutment pads 21 and it is superposed on and welded to the coupling frame 23, so that it also serves as a presser member when fixing the lenses 1 in the lower rims 2b. The nose abutment frame 22 fixes the lenses 1 by fitting a V frame 22v in a V receptor 23v at the top end of the coupling frame 23. Further, all of the members are fixed by the single threaded bolt 25 by fitting the presser member 24 and its downward protrusions 24a on the V frame 22v.

In this way, the nose abutment 20 employs a system in which it is inserted in the central coupling portion between the upper rims 2a and the lower rims 2b so that it can be detachably fixed to the coupling frame 23 with the single threaded bolt 25. While the nose abutment frame 22 is detachably fixed along the coupling frame 23, its shape and size are not influenced by the upper and lower rims 2a and 2b, and should fit the shape of the nose of the user.

Thus, by anticipating various nose shapes and sizes and preparing various kinds in the shape and dimension of the nose abutment pad 21, it is possible to select and use a suitable one for each user. For example, only if the dimension of the nose abutment pad 21 fits according to the shapes and sizes of the noses of people all over the world, such as Mongoloids and Caucasians, it can be used as an eyeglass frame which can be commonly used for people in every country.

Further, as shown in Fig. 8, the rear end 7a of the temple 7 is provided with corrugated portions 7b at a plurality of locations on its bottom end face. The pitch of the corrugated portions is adapted to suit for people all over the world even though the position of the ears varies according to the size of the wearer's head.

Fig. 13 is an explanatory view of the eyeglass frame of the third embodiment in use. In non-use state, the temples 7 are formed so that their tips are directed slightly inwardly as shown by the solid line. But in use state, i.e. while worn, they will spread to the state shown by the one-dot chain line. In the state shown by the solid line, the temples are spread outwardly to the restricted angle limit. In the use state, they are further spread by the resilience of the temples 7.

As shown in Fig. 9, in the eyeglass frame of this embodiment, near the center of the upper and lower rims 2a and 2b, partial edges 2aE and 2bE are provided on the deep side of the rim edges, and it is formed such that the lenses 1 are stably fixed to the rims 2 at three locations, i.e. between the nose pad frame 22, which is fitted on the coupling frame 23 between the right and left rims 2, and the two partial edges 2aE and 2bE.

Since the lenses 1 are held and fixed at the three locations, they can be held and fixed without strains. It is possible to avoid the trouble that heretofore, generally, when the lenses 1 are held by the rim edges over the entire circumferences thereof, the lenses 1 are strained due to strains of the rims.

While three embodiments of the temple connection structure of this invention have been shown, various modifications is appolicable in addition to the above examples. It will be apparent to a person of ordinary skill in the art that each modification is applicable within the range of this invention and in the range of this invention.

### Industrial applicability

As described above in detail, the temple connection structure of the eyeglass frame of this invention is widely applicable not only to ordinary eyeglass frames but to sunglasses and polarized glasses. In particular, for sunglasses and polarized glasses, even though features of faces of people in the world differ, such as Mongoloids and Caucasians, by finely adjusting the holding and fixing state by the spherical seats at the ends of the temples, people all over the world can use it.

## Claims

1. A temple connection structure for connecting a temple to a front portion of an eyeglass frame, said temple connection structure comprising a clamp portion provided at one end of the front portion of the eyeglass frame, a spherical member received in said clamp portion, and a joint member provided at a front end of the temple and coupled to said spherical member so that the temple is foldable and unfoldable by pivoting about a central axis of said spherical member within a predetermined angle, said spherical member being turnable in any desired direction, whereby the orientation of the temple is finely adjustable, and being adapted to be clamped in position by said clamp portion with the orientation of the temple finely adjusted.

2. The temple connection structure of claim 1 wherein said clamp portion protrudes outwardly from a rim of the front portion of the eyeglass, and comprises separate upper and lower members, said spherical member being received between said upper and lower members of said clamp portion, said upper and lower members of said clamp portion being bound together by a threaded shaft, whereby said spherical member is clamped in position by tightening said threaded shaft, thereby pressing said upper and lower members of said clamp portion against said spherical member, after finely adjusting the orientation of the temple by turning said spherical member.

3. The temple connection structure of claim 1 or 2 wherein said spherical member comprises a pair of upper and lower semispherical bodies that are coupled together through a shaft and a pivoting angle restricting means with their flat surfaces facing each other, said joint member being disposed between said semispherical bodies so as to be rotatable about said shaft by an angle limited by said pivoting angle restricting means, thereby allowing the temple to pivot between its folded and unfolded positions.

4. The temple connection structure of claim 3 wherein said shaft protrudes from the flat surface of one of said semispherical bodies, extends through a shaft hole formed in said joint member and is received in a shaft hole formed in the flat surface of the other of said semispherical bodies, said pivoting angle restricting means comprising a pin protruding from the flat surface of said one of said semispherical bodies, a circumferentially elongated guide groove formed in said joint member, and a pin hole formed in the flat surface of the other of said semispherical bodies, said pin extending through said guide groove and is received in said pin hole, whereby the temple is pivotable between said folded and unfolded positions.

5. The temple connection structure of claim 1 or 2 wherein said spherical member comprises a spherical body, and a shaft provided in said spherical body so as to pass its center, said spherical body being formed with a slit extending perpendicular to said shaft, said joint member being formed with a shaft hole and inserted in said slit with said shaft extending through said shaft hole so as to be pivotable about said shaft relative to said spherical body by an angle determined by the circumferential gap defined between said joint member and said slit, whereby the angle by which the temple can pivot between its folded and unfolded positions is restricted to a value corresponding to said circumferential gap.

6. The temple connection structure of any of claims 2-5 wherein spherical bearing seats for receiving said spherical member are formed in opposed surfaces of said upper and lower clamp members.

7. A temple connection structure of an eyeglass frame as claimed in claim 6 wherein rubber frictional materials are provided on said spherical bearing seats.

8. A temple connection structure for connecting a temple to a front portion of an eyeglass frame, said temple connection structure comprising a a clamp portion provided at one end of the front portion of the eyeglass frame, a spherical member received in said clamp portion, a shaft fixed to a front end of said temple and rotatably received in said spherical member, whereby said temple is pivotable between its folded and unfolded positions.

9. The temple connection structure of claim 8 wherein said clamp portion comprises a front clamp member protruding outwardly from a rim of the front portion of the eyeglass frame, and a rear clamp member protruding from a fixed member provided behind the rim, said spherical member being adapted to be clamped between said front and rear clamp members.

10. The temple connection structure of claims 8 or 9 wherein said shaft passes the center of said spherical member, said temple connection structure further comprising a temple pivoting angle restricting means comprising a cutout formed in said shaft, and a threaded shaft threaded into said spherical shaft until its tip protrudes into said cutout, thereby restricting the rotational angle of said shaft relative to the spherical member.
